# EUROPEAN PATENT SPECIFICATION

(11) **EP 4 783 579 B1**
(45) Date of publication and mention of the grant of the patent: **18.11.2026**
(21) Application number: 25154487.0
(22) Date of filing: 28.01.2025
(51) Int. Cl.: H04N 19/17, H04N 19/86, H04N 19/167, H04N 19/176

(54) **ENCODING OF A MASK IN AN IMAGE FRAME**
KODIERUNG EINER MASKE IN EINEM BILDRAHMEN
CODAGE D'UN MASQUE DANS UNE IMAGE

(43) Date of publication of application: 29.07.2026
(73) Proprietor: Axis AB, 223 69 Lund (SE)
(72) Inventor: Edpalm, Viktor, 223 69 Lund (SE); Ericson, Joakim, 223 69 Lund (SE)
(74) Representative: AWA Sweden AB

(56) References cited:
- EP-A1- 4 265 479
- EP-B1- 3 340 623
- EP-B1- 3 796 655

## Description

### Technical Field

The present disclosure relates to image encoding, and in particular to a method, device and software for encoding an image frame in a video stream, such that a decoded version of the encoded the image frame is provided with a masked region.

### Background

In many imaging and video processing applications, masks with sharp edges are used to selectively exclude or modify certain regions of an image. These masks serve various purposes, such as removing unwanted sensor data, defining regions of interest, or applying privacy filters. For instance, in fisheye cameras, a mask may be applied to eliminate areas of the sensor that capture content outside the optical field of view, thereby reducing noise and optical distortions.

While these masks improve the intended visual content, they may introduce challenges in video encoding. The sharp transitions between masked and unmasked regions create abrupt intensity changes that are difficult for modem video codecs, such as H.264, HEVC, and AV1, to efficiently compress. These codecs rely on block-based encoding techniques and predictive models that assume natural, gradual variations in image content. When a mask with a sharp edge cut straight through an encoding block, the encoder may need to allocate more bits to accurately represent the boundary, increasing the overall bitrate and computational load. The unnatural edge can also cause compression artifacts, such as "ringing", where unwanted oscillations appear near the boundary due to the transform-based nature of modern video compression.

There is thus a need for improvements in this context.

With respect to relevant prior art, it is noted that European Patent EP3340623 B1 and European Patent application EP4265479 A1 each disclose approaches for coding a mask associated with an image, involving a block-aligned mask. Furthermore, European Patent EP3796655 B1 discloses an approach in which the images are encoded in their entirety as non-display I-frames, while the mask data is transmitted in a P-frame.

### Summary

In view of the above, solving or at least reducing one or several of the drawbacks discussed above would be beneficial, as set forth in the attached independent patent claims.

According to a first aspect of the present disclosure, there is provided a method of encoding an image frame in a video stream, such that a decoded version of the encoded image frame is provided with a first masked region, the method comprising; receiving a pre-generated encoded image frame having a same resolution as the image frame, the pre-generated encoded image frame comprising motion vectors but not any residual data, wherein the motion vectors are configured to expand a second masked region, defined by a second mask, into the first masked region, wherein the second masked region has an edge aligned to a set of coding blocks of the pre-generated encoded image frame, such that each coding block of the set of coding blocks is not part of the second masked region, and wherein the first masked region has an edge that divides each coding block of the set of coding blocks; applying the second mask to the image frame to provide a masked image frame; encoding the masked image frame, setting the encoded masked image frame as a no-display frame and adding the encoded masked image frame to an encoded video stream; and adding the pre-generated encoded image frame to the encoded video stream and setting the encoded masked image frame as a reference to the pre-generated encoded image frame.

Advantageously, this method allows for efficient encoding of a masked image frame while ensuring that the final decoded image presents a mask with an edge that cuts through encoding blocks. By leveraging a pre-generated encoded frame with motion vectors, the method transforms an initially block-aligned (second) mask applied to the masked image frame into a final (first) mask with arbitrary edge positioning when decoding the encoded masked image frame. This ensures that the mask appears in the correct position and shape as defined by the first mask in the decoded video while minimizing encoding complexity. Since the mask applied to the image frame during encoding (the second mask) is block-aligned, it allows the encoder to process the masked image efficiently, avoiding the high complexity associated with sharp edges that cut through coding blocks. Moreover, directly encoding a mask with sharp edges that cut through encoding blocks can introduce ringing artifacts or high bitrate overhead. By transforming a block-aligned mask into the intended sharp-edged mask at the decoding stage using the motion vectors of the pre-generated encoded image frame, the method preserves visual quality without increasing encoding cost.

Advantageously, the transformation of the masked region is handled entirely through motion vectors, without requiring residual data. This means that the transforming inter frame (the pre-generated encoded image frame) can be pre-generated and reused across multiple image frames. Since the mask is typically static and its size, shape and position known in advance, at least for a set of images in the video stream, the pre-generated encoded image frame can be created once and provided to the encoder in advance. This eliminates the need to dynamically encode the transformation for every frame, reducing computational complexity.

Put differently, by relying only on motion vectors to expand the mask from the block aligned second mask to the first mask, the encoding process becomes more efficient. The expression "configured to expand" refers to the intentional use of motion vectors in the pre-generated encoded image frame to extend the second masked region, which is aligned to coding block boundaries, into the first masked region, which has edges that divide coding blocks. This approach allows the second mask to serve as a simpler representation during encoding, while the motion vectors extrapolate its boundaries during decoding to match the more complex geometry of the first mask. Instead of computing a new transformation per frame, the encoder simply reuses the pre-generated image frame, ensuring that the mask is applied consistently while maintaining low encoding overhead.

The encoded masked image frame is marked as a no-display frame, meaning it is included in the encoded video stream but is never directly displayed during decoding. Instead, it serves as a reference frame for the pre-generated encoded image frame, which applies the necessary motion vectors to propagate the mask transformation. During decoding, the motion vectors of the pre-generated encoded image frame reshape the second masked region applied to the masked image frame into the first masked region by shifting mask boundaries at a finer granularity than block alignment allows.

The pre-generated encoded image frame is very small in terms of bitrate, allowing for a more efficient encoding process. By encoding both the pre-generated encoded image frame and the no-display reference masked image frame, the method achieves greater compression efficiency compared to conventional approaches that encode the first mask directly on the image frame. This results in a more bandwidth-efficient solution than encoding the image frame with a smooth mask, reducing overall bitrate while maintaining an accurate image mask on a decoder side.

In some examples, the edge of the first masked region divides each coding block of the set of coding blocks into a first portion corresponding to the first masked region and a second portion not corresponding to the first masked region; and each coding block of the set of coding blocks in the pre-generated encoded image frame is encoded using a wedge code book into a first encoded portion corresponding to the first portion, and a second encoded portion corresponding to the second portion, wherein the second portion is associated with a zero motion vector, and wherein the first portion is associated with a motion vector pointing to a coding block of the second masked region in the pre-generated encoded image frame.

Advantageously, the method may achieve precise placement of the mask edge without introducing excessive encoding overhead by encoding the transformation of the edge of the masked region using wedge coding and motion vectors. In this context, the term "corresponding to" can also be understood as "overlapping with", describing how the portions relate to the masked regions.

In video coding (such as for example using the AV1 and AV2 codec), wedge encoding is a technique used to encode blocks with sharp transitions, such as object edges, shadows, or masks. Instead of encoding each pixel separately, these techniques leverage predefined wedge patterns (a set of predefined binary masks or wedge masks, defined in the wedge code book) to represent a block split into two regions. By setting the motion vector of the first portion of the encoding block such that it points to the coding block which belongs to the second (block aligned) masked region, this will effectively mask the image data of that portion in the finally decoded image frame. Thus, the motion vector of the first portion serves to expand the second masked region into the first masked region upon decoding.

In some examples, encoding each coding block of the set of coding blocks in the pre-generated encoded image frame comprises selecting a wedge mask from the wedge code book depending on how the first masked region divides the coding block; and encoding the coding block using the selected wedge mask.

In some examples, the method further comprises generating the pre-generated encoded image frame using software, by, for each coding block of the pre-generated encoded image frame: upon the set of coding blocks not comprising the coding block, defining a zero motion vector for the coding block; and upon the set of coding blocks comprising the coding block, encoding the coding block using the wedge code book. Generating the pre-generated encoded image frame in software in advance may reduce real-time computational load and facilitate consistent mask transformations across frames. Moreover, the generation of the pre-generated encoded image frame may be platform independent.

In some examples, the set of coding blocks is divided into a first subset and a second subset based on their position in the pre-generated encoded image frame, wherein the step of defining a motion vector of the first portion to a vector pointing to a coding block of the second masked region in the pre-generated encoded image frame comprises: for coding blocks of the first subset, setting the motion vector of the first portion to a same first vector; for coding blocks of the second subset, setting the motion vector of the first portion to a same second vector.

Advantageously, in this example, the encoding size of the pre-generated encoded image frame can be further reduced by optimizing how motion vectors are assigned and compressed. Specifically, all motion vectors for coding blocks on one side of the mask, such as the left edge, are set to the same first motion vector, while all motion vectors on the opposite side, such as the right edge, are set to the same second motion vector. This structured assignment of motion vectors may result in a more efficient encoding process. During encoding, motion vectors are typically compressed using delta coding, meaning that instead of storing each motion vector independently, only the differences (deltas) between consecutive vectors are encoded. Since the motion vectors within each subset are identical, the differences between them are zero, leading to highly efficient compression.

In some examples, wherein the first and second vector is determined by, determining the first vector by determining a shortest vector that, for each coding block of the first subset results in a pointer to a coding block of the second masked region in the pre-generated encoded image frame; and determining the second vector by determining a shortest vector that, for each coding block of the second subset results in a pointer to a coding block of the second masked region in the pre-generated encoded image frame. In this example, the first and second motion vectors are determined by selecting the shortest possible vectors that correctly point to a coding block in the second masked region. For coding blocks in the first subset, the shortest vector that maps to a corresponding masked block is chosen as the first vector, while for coding blocks in the second subset, the shortest vector that maps to a corresponding masked block is chosen as the second vector. Using shorter motion vectors may reduce the bitrate required to encode motion information, as motion vectors are typically encoded using predictive coding and variable-length encoding. When motion vectors are short and consistent, they can be efficiently predicted from neighbouring vectors, minimizing the number of bits needed to store motion data.

In some examples, the first masked region is defined by a first mask, the method further comprising generating the pre-generated encoded image using an encoder supporting wedge code books by: configuring the encoder to not create residual data; creating a first template image frame having the same resolution as the image frame, and applying the first mask to define a first masked template frame; creating a second template image frame having the same resolution as the image frame, and applying the second mask to define a second masked template frame; encoding, by the encoder, the second masked template frame as an I-frame; encoding, by the encoder, the first masked template frame as a P-frame referencing the encoded second masked template frame; and setting the encoded first masked template frame as the pre-generated encoded image.

By allowing an encoder to generate the pre-generated frame based on optimized motion vectors and wedge codebook techniques, this example facilitates that the mask transformation is applied in a way that minimizes bitrate while maintaining an accurate transition between the masked and unmasked regions. This approach leverages the encoder's capabilities to determine the most efficient motion representation, reducing encoding complexity while ensuring high-quality mask transformation in the decoded video. Moreover, this approach may also make the method flexible to different codecs, as it does not rely on a specific encoding standard but rather leverages fundamental motion compensation and reference frame techniques. By using standardized motion vector-based transformations, the method can be applied across various video compression formats that support inter-frame referencing and wedge partitioning, making it adaptable to different encoding environments while maintaining efficiency.

In some examples, the wedge code book is one of: AV1 wedge codebook, or AV2 wedge codebook.

In some examples, the image frame is captured by a fisheye camera, wherein first masked region covers a periphery of the image frame to remove noise and optical effects. Masking is beneficial for fisheye cameras because their wide-angle lenses capture a large field of view, often including unwanted peripheral distortions, noise, and optical artifacts such as stretching and vignetting. By applying a mask to the periphery of the image frame, these unwanted effects can be removed, ensuring that only the relevant, undistorted portion of the image is retained for encoding and displaying. The techniques described herein may be particularly well-suited for such masking because the mask position remains stationary, allowing the pre-generated encoded image frame to be efficiently reused across multiple frames.

**In** some examples, the first masked region covers image data from areas in a captured scene labelled as uninteresting. Advantageously, masking uninteresting areas in a captured scene helps reduce bandwidth by removing image data that does not need to be encoded. The techniques described herein may be particularly useful to mask stationary portions of a scene, such as walls, ceilings, or static backgrounds in surveillance footage, where no relevant motion or activity occurs. The first masked region may for example have a polygonal shape, with an edge cutting through encoding block(s) in the image frame.

**In** examples, the method further comprises encoding each further image frame of a sequence of image frames into the encoded video stream by: applying the second mask to the further image frame to provide a masked further image frame; encoding the masked further image frame, setting the encoded further masked image frame as a no-display frame and adding the encoded further masked image frame to the encoded video stream; and adding the pre-generated encoded image frame to the encoded video stream and setting the encoded further masked image frame as a reference to the pre-generated encoded image frame. As previously described, for a static mask position in the image frames of the captured video stream, the same pre-generated encoded image frame may be reused for each image frame in the video stream. Advantageously, by consistently reusing the same pre-generated encoded image frame, the example may ensure a low-cost transformation of the block aligned (second) mask using motion vectors, maintaining accurate placement of the masked region in the decoded video.

According to a second aspect of the disclosure, the above object is achieved by a non-transitory computer-readable storage medium having stored thereon instructions for implementing the method according to the first aspect when executed on a device having processing capabilities.

According to a third aspect of the disclosure, the above object is achieved by a device for encoding an image frame in a video stream, such that a decoded version of the encoded the image frame is provided with a first masked region, the device configured for: receiving a pre-generated encoded image frame having a same resolution as the image frame, the pre-generated encoded image frame comprising motion vectors but not any residual data, wherein the motion vectors are configured to expand a second masked region, defined by a second mask, into the first masked region, wherein the second masked region has an edge aligned to a set of coding blocks of the pre-generated encoded image frame, such that each coding block of the set of coding blocks is not part of the second masked region, and wherein the first masked region has an edge that divides each coding block of the set of coding blocks; applying the second mask to the image frame to provide a masked image frame; encoding the masked image frame, setting the encoded masked image frame as a no-display frame and adding the encoded masked image frame to an encoded video stream; and adding the pre-generated encoded image frame to the encoded video stream and setting the encoded masked image frame as a reference to the pre-generated encoded image frame.

In some examples, the device is a fisheye camera, wherein first masked region covers a periphery of the image frame to remove noise and optical effects.

The second and third aspect may generally have the same features and advantages as the first aspect. It is further noted that the disclosure relates to all possible combinations of features unless explicitly stated otherwise.

### Brief Description of the Drawings

The above, as well as additional objects, features, and advantages of the present disclosure, will be better understood through the following illustrative and non-limiting detailed description of embodiments of the present disclosure, with reference to the appended drawings, where the same reference numerals will be used for similar elements, wherein:
Figure 1 shows an image frame with a smooth mask being applied, according to embodiments;
Figure 2 shows an image frame with a block aligned mask being applied, according to embodiments;
Figure 3a conceptually shows a pre-generated encoded image frame used to transform the block-aligned mask of Figure 2 into the smooth mask of Figure 1 on a decoder side, according to embodiments;
Figure 3b shows a first and a second wedge code book, according to embodiments;
Figure 4 shows encoding of a coding block into a first portion and a second portion using a wedge mask from the wedge code book of Figure 3b, according to embodiments;
Figure 5 shows an encoded video stream according to embodiments;
Figure 6 shows decoding of the encoded video stream of Figure 5, according to embodiments;
Figure 7 shows the pre-generated encoded image frame being generated using software, according to embodiments;
Figure 8 shows the pre-generated encoded image frame being generated using an encoder, according to embodiments;
Figure 9 shows a flow chart of method of encoding an image frame in a video stream, such that a decoded version of the encoded the image frame is provided with the smooth mask of Figure 1, according to embodiments.

### Detailed Description

Masking is widely used in image and video processing to selectively exclude or obscure specific regions of a frame, improving visual clarity and optimizing compression efficiency. In applications such as fisheye cameras, masking helps eliminate peripheral distortions, vignetting, and sensor artifacts that do not contribute meaningful visual information. Additionally, masking can be used to remove uninteresting or static portions of a scene, such as walls or ceilings in surveillance footage, reducing the amount of image data that needs to be processed and transmitted. By minimizing unnecessary visual content, masking allows for more efficient encoding, lowering bandwidth requirements while preserving the quality of relevant image areas.

The present disclosure relates to an efficient method for encoding image frames in a video stream that includes a masked region, particularly beneficial for applications where the mask remains static across multiple frames. Instead of directly encoding a mask with smooth edges, an approach that may be computationally expensive and can introduce compression artifacts, the techniques described herein leverages a pre-generated encoded image frame containing only motion vectors and no residual data. This frame is used as an inter frame to transform a block-aligned mask applied to the image frames which are encoded into the final smooth mask on a decoder side, ensuring accurate placement while optimizing encoding efficiency. The ability to reuse the pre-generated encoded image frame across multiple frames further enhances computational efficiency and reduces bandwidth consumption, making this approach particularly advantageous for applications requiring consistent, high-quality mask representation.

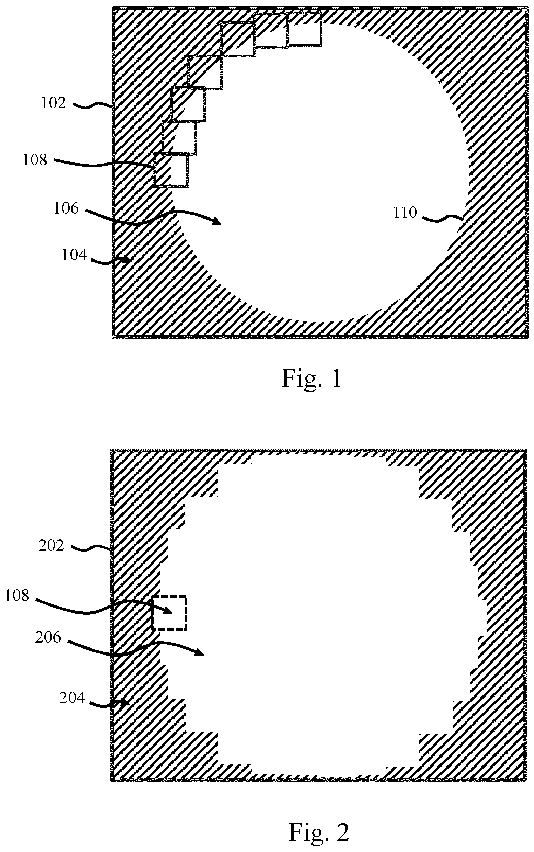

Embodiments of these techniques will now be described in conjunction with figures 1-9.

Figure 1 schematically shows an image frame 102 to which a mask 104 has been applied. In this example, the image frame 102 is captured by a fisheye camera, and the mask is intended to remove/mask unwanted peripheral distortions, noise, and optical artifacts at the periphery of the image frame 102. By applying the mask 104 (referred herein as first masked region 104) that follows the natural curvature of the fisheye lens, typically forming a circular or annular shape that removes the outermost regions of the image where distortion is most severe, unnecessary image data is eliminated, reducing bandwidth and improving encoding efficiency. This ensures that only a relevant portion 106 of the image frame 102 is processed and transmitted, optimizing compression without wasting resources on highly distorted areas. Additionally, removing peripheral artifacts results in a more visually appealing and geometrically consistent output, enhancing image quality for applications where accurate visual representation is desired. As shown in figure 1, an edge 110 of the first masked region 104 divides each coding block 108 of a set of coding blocks in the image frame 102.

Encoding the image frame 102 with the mask 104, where the edge of the mask divides a set of coding blocks 108, can lead to several negative effects. The sharp transition within coding blocks 108 creates abrupt intensity changes, increasing encoding complexity and requiring more bits to accurately represent the block. Even with additional bits allocated, the edge 110 may still appear blurred or softened in the decoded version due to the limitations of transform-based compression. Furthermore, the black colour (or any other colour used for the masked region 104) may leak into neighbouring blocks due to block-based transform coding and quantization effects, resulting in visible artifacts such as ringing or blocking. These artifacts degrade the visual quality, especially in areas near the mask boundary, and can interfere with accurate image reconstruction

To reduce complexity and improve compression efficiency, the mask can instead be block-aligned, as shown in Figure 2. In this figure, a second mask 204 (referred herein as a second masked region 204) is applied to an image frame 202, which corresponds to image frame 102 but is referenced differently to clearly distinguish the two. The second masked region 204 is aligned with a set of coding blocks, ensuring that the edge of the mask follows block boundaries rather than cutting through individual blocks. Specifically, each coding block 108 in the set remains entirely outside the second masked region 204, preventing any coding block from being partially masked. In figure 2, one of the coding blocks 108 has been added to clearly visualize the block-alignment of the second masked region 204. Advantageously, this eliminates sharp transitions within individual coding blocks, allowing the encoder to process the second masked region 204 more efficiently. By ensuring that each block is either fully masked or fully unmasked, the encoding process avoids high-frequency artifacts, reduces bitrate consumption, and improves prediction accuracy. This results in a more efficient compression. However, since the unmasked area 206 is increased, a larger portion of the image data in image frame 202 is encoded compared to image frame 102 in figure 1, which in turn increases the required bandwidth. Moreover, the shape of the second masked region 204 is constrained by the block alignment, meaning that it may not precisely follow the intended mask shape as shown in figure 1. This can result in unwanted image data being retained at the mask boundary, potentially affecting visual consistency and reducing the effectiveness of the mask in removing distortions or uninteresting regions. As a result, while the block alignment of the second masked region 204 improves compression efficiency, it comes at the cost of increased bandwidth usage and reduced flexibility in defining the exact shape of the second masked region 204.

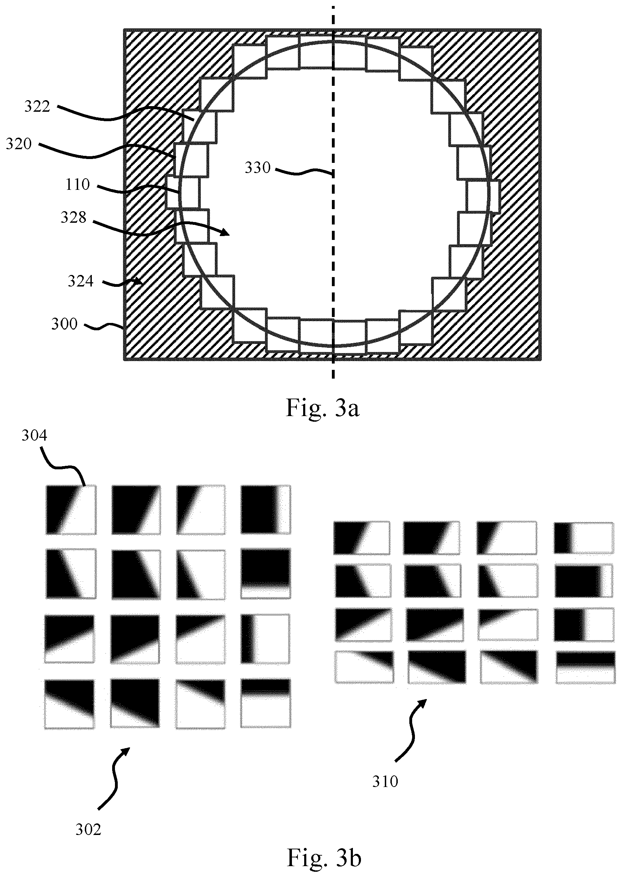

To take advantage of the compression efficiency achieved through block alignment, as described in conjunction with Figure 2, while still providing a masked region as shown in Figure 1, a pre-generated encoded image frame with the same resolution as image frame 202 can be used. Figure 3a conceptually illustrates such a pre-generated encoded image frame 300.

The pre-generated encoded image frame 300 is defined as a P-frame, containing motion vectors that map to corresponding image data from the reference image frame it is associated with. Unlike a conventional P-frame, the pre-generated encoded image frame 300 contains no residual data, meaning that its decoded output consists entirely of the image data retrieved from the reference image frame, determined solely by motion compensation. This allows for an efficient transformation of the block-aligned mask into the desired mask shape shown in figure 1, without introducing additional encoding complexity or residual overhead. Advantageously, this approach maintains low encoding costs, reduces bitrate, and eliminates artifacts that would otherwise result from encoding a sharp mask transition directly. Additionally, by ensuring that the transformation is handled purely through motion vectors, the method remains efficient and flexible, allowing the same pre-generated encoded image frame to be reused across multiple frames, further optimizing compression and bandwidth efficiency.

Going into details of the pre-generated encoded image frame 300, the motion vectors are configured to expand the second masked region 204 (as shown in figure 2), defined by a second mask, into the first masked region 104 (as shown in figure 1). This is done by using the size and shape of the first masked region 104, to identify a set of coding blocks 320 (identified as squares in figure 3A) in the pre-generated encoded image frame 300.

Since the pre-generated encoded image frame 300 has the same resolution as image frames 102 and 202, both masked regions 104 and 204 can be conceptually applied to the pre-generated encoded image frame to determine which coding blocks belong to this transformation process. The second masked region 204 has an edge that is aligned to the set of coding blocks 320, ensuring that each coding block remains fully outside the masked region 204. In contrast, the first masked region 104 has an edge 110 that cuts through the set of coding blocks 320, dividing each block into a masked portion and an unmasked portion. This distinction will be used to define how motion vectors will be applied to the pre-generated encoded image frame 300 to facilitate transition from the block-aligned mask 204 to the intended mask shape 104 during decoding.

The set of coding blocks 320 of the pre-generated encoded image frame 300 are typically set to a uniform size, such as 4×4 pixels or 8×8 pixels, to align with standard video encoding block structures. The size of each coding block (including the set of coding blocks 320 and the remaining coding block) of the pre-generated encoded image frame 300 may further be determined based on the techniques used for encoding the set of coding blocks 320, as described below. For each coding block that is not part of the set of coding blocks 320, i.e., coding blocks in areas 324 and 328, the motion vector is set to zero, as no transformation of the encoded image frame is required in these areas.

For the coding blocks among the set of coding blocks 320, each block needs to be analysed to determine a subregion inside the first masked region 104 and a subregion outside the first masked region 104. This can be achieved using a wedge code book. A wedge code book is a predefined set of binary partitioning patterns used to divide a coding block into two regions based on a sharp transition, such as an object boundary or a mask edge. Each wedge mask in the codebook defines a different way to split a block into two distinct areas, allowing the encoder to efficiently represent the division between masked and unmasked regions. By selecting an appropriate wedge mask from the codebook, the encoder can accurately separate the two subregions. However, it should be understood that any other suitable technique from image encoding or video compression may be used to determine and encode the division between masked and unmasked regions. The use of a wedge codebook is one example, but alternative methods, such as directional prediction, segmentation-based encoding, exponential partitioning, geometric partitioning or transform-based edge handling, may also be applicable depending on the specific implementation and codec used.

Figure 3b illustrates, by way of example, two wedge codebooks 302 and 310 as defined for the AV1 and/or AV2 video codec. The left codebook 302 is used for square coding blocks, while the right codebook 310 is used for rectangular coding blocks. The AV1 wedge codebook defines partition orientations that can be horizontal, vertical, or oblique, with slopes of ±2, ±0.5, and 0. The wedge prediction mode can thus be applied to both square and rectangular blocks, utilizing a 16-entry shape codebook (16 wedge masks in each code book 302, 310) to efficiently represent block partitions and improve compression efficiency for sharp transitions.

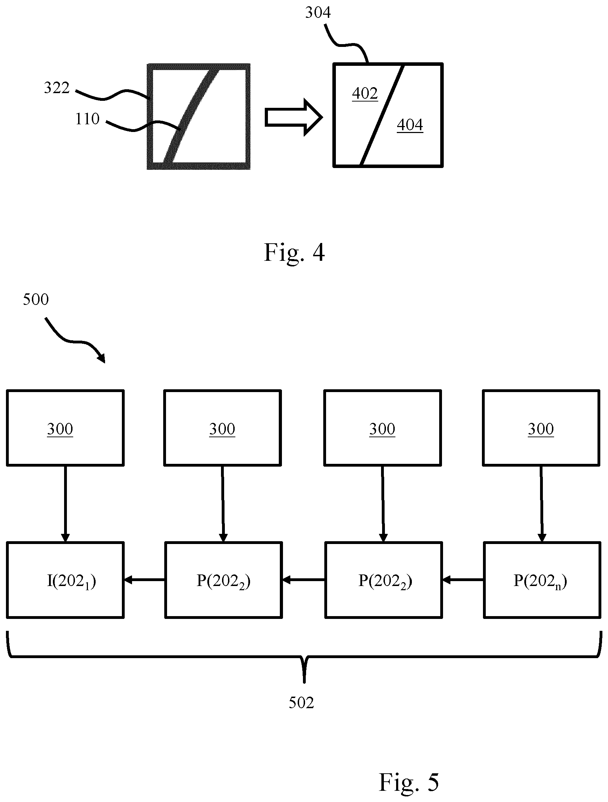

Figure 4 illustrates an example of how to encode each coding block from the set of coding blocks 320. In this example, a specific coding block 322 is used to demonstrate the process. The step in encoding the block is selecting an appropriate wedge mask from the wedge codebook 302, ensuring a substantially correct representation of the division between masked and unmasked regions.

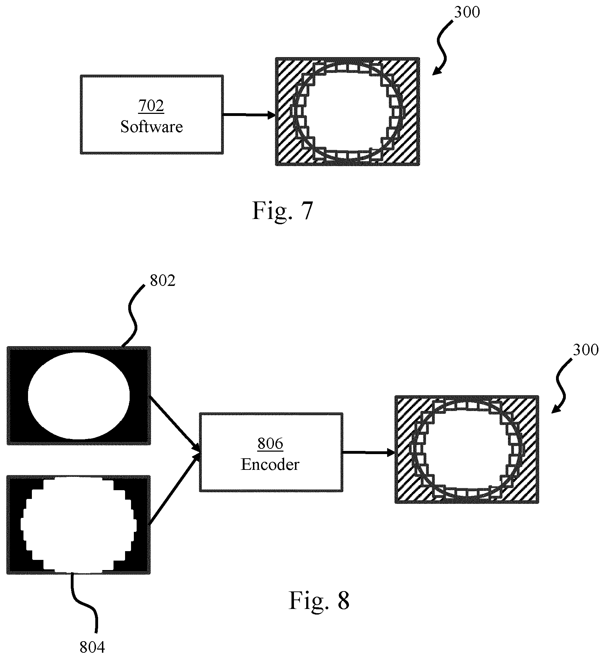

The selection process is based on how the edge 110 of the first masked region 104 divides the coding block into two portions: a first portion 402, which corresponds to the masked region, and a second portion 404, which corresponds to the unmasked region. The division is analysed (for example using an encoder, see figure 8 below, manually or by any suitable algorithm, see figure 7 below) and a best-fitting wedge mask is determined from the wedge codebook 302 that closely matches the actual segmentation of the block 322.

In this example, wedge mask 304 from codebook 302 is selected as the most suitable shape for representing the division. The selected wedge mask 304 thus defines the binary segmentation into the portions 402 and 404 within the block 322.

Figure 5 illustrates, by way of example, an encoded video stream 500 utilizing the techniques described herein. As discussed above, a block-aligned mask 204 is applied to an image frame 202 in the video stream to improve encoding efficiency. When the masked area remains static between frames, the same block-aligned mask 204 is typically applied to each image frame throughout the video stream as indicated in figure 5 using the reference 202_{1...n}.

For example, in a fisheye camera setup, the mask may be used to remove peripheral distortions, radial stretching, and sensor artifacts that do not contribute meaningful visual information. Similarly, masking can be applied to eliminate uninteresting or static portions of a scene to reduce bandwidth usage. In both cases, the mask remains unchanged across frames, allowing the pre-generated encoded image frame 300 to be reused.

Each image frame 202_{1...n} is encoded as either an I-frame (intra-coded frame) or a P-frame (predictive-coded frame), depending on the Group of Pictures (GOP) structure and the encoder configuration. I-frames are encoded independently without referring to other frames, serving as key reference points in the video stream, while P-frames use motion compensation to encode only the differences from a preceding frame, reducing bitrate and improving compression efficiency. In some examples, B-frames (bidirectional-predictive frames) can be used as an alternative to some or all of the P-frames in figure 5.

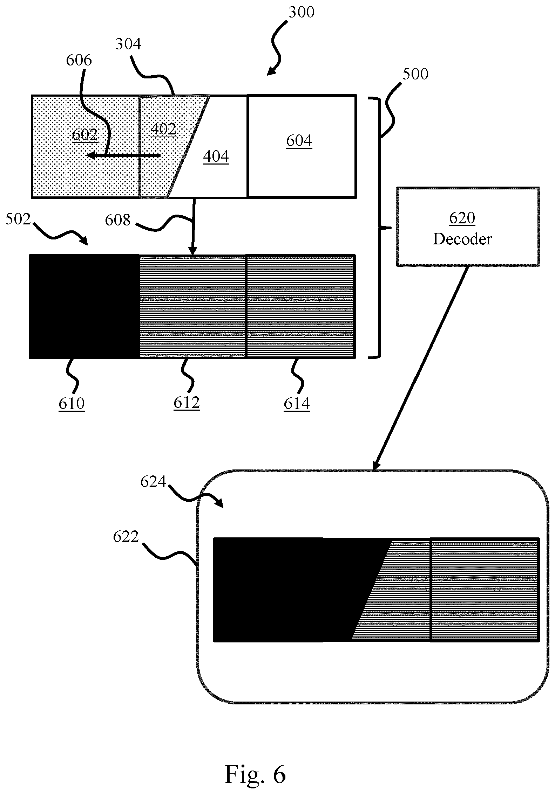

Each encoded image frame 502 is then used as a reference to the corresponding pre-generated encoded image frame 300. Each encoded image frame 502 is set as a no-display frame. During decoding, this means that the motion vectors in the pre-generated encoded image frame 300 are applied to transform the block-aligned mask into the intended final mask shape. Since the no-display frame still contains the original image data, the decoder reconstructs the image frame with the correct mask applied, ensuring that the masked region appears in its proper position. This will now be further explained in conjunction with figure 6.

Figure 6 schematically shows how the pre-generated encoded image 300 "interacts" with the encoded image frame 502 to which the block aligned mask has been applied to transform the mask to its intended position and size. In figure 6, for ease of description, only three corresponding encoding blocks are shown in the pre-generated encoded image 300 and the encoded image frame 502.

It should be noted that the corresponding coding blocks in the pre-generated encoded image frame 300 and the encoded image frame 502 do not necessarily need to be the same size. Video codecs typically support block partitioning and merging, allowing blocks of different sizes to be used in different encoding stages. The decoder can interpret the motion vectors from the pre-generated encoded image frame 300 and correctly apply them to the appropriate portions of the image data in the encoded image frame 502, even when the block sizes differ.

In Figure 6, the encoded image frame 502 contains one masked block 610 and two unmasked blocks 612 and 614, i.e., showing the actual image data of the captured image frame (indicated by the horizontally striped pattern in figure 6). However, as seen in the pre-generated encoded image frame 300, the middle coding block 612 in the encoded image frame 502 should, in reality, be divided into a masked portion and an unmasked portion. This discrepancy is handled by the motion-based mask transformation in the decoding process.

The pre-generated encoded image frame 300 contains three key coding blocks that correspond to different regions in the encoded image frame 502
- Coding block 602 represents a fully masked area 610 in the encoded image frame 502, corresponding to the second masked region 204.
- Coding block 304 (as shown in figure 4) represents a partially masked region. It consists of a first portion 402, which should be part of the transformed masked region (first masked region 104), and a second portion 404, which should remain unmasked.
- Coding block 604 represents a fully unmasked region, which is outside both the first masked region 104 and the second masked region 204 and thus remains unchanged.

To ensure correct transformation during decoding, the motion vectors are assigned as follows:
- The motion vectors of coding block 602, coding block 604, and the second portion 404 of coding block 304 are set to zero, meaning that these regions remain unchanged in the encoded image frame 502.
- The motion vector 606 of the first portion 402 of coding block 304 is set to point to coding block 602, which represents the masked area 610 in the encoded image frame 502.

This means that during decoding, the left portion of coding block 612 in the encoded image frame 502 will be replaced with the corresponding masked content from coding block 610, effectively transforming part of the unmasked area in the coding block 612 into the intended first masked region 104. The decoded version 624 (e.g., shown on a display 622 or stored in a computer memory) thus accurately reflects the intended masked area.

In Figure 6, the motion vector 606 of the first portion 402 of coding block 304 is set to point to the nearest neighbouring coding block 602, which correspond to a masked area (the second masked region) in the encoded image frame 502. By selecting the closest available masked block, the transformation is applied efficiently while minimizing encoding complexity. Since shorter motion vectors typically require fewer bits to encode, this approach may help to reduce bitrate while maintaining accurate mask placement during decoding. However, it should be noted that the motion vector 606 may point to any coding block which correspond to the second masked region in the encoded image frame 502.

**In** some examples, the motion vectors of the pre-generated encoded image frame 300 may be optimized to further reduce bitrate, as illustrated in Figure 3a by the dotted line 330. **In** this approach, the set of coding blocks 320 is divided into two subsets based on their position within the pre-generated encoded image frame: a first subset (coding blocks to the left of the dotted line 330) and a second subset (coding blocks to the right of the dotted line 330). It should be noted that this way of dividing the set of coding blocks 320 is just one example. The encoding blocks could also be divided into different configurations based on their position in the pre-generated encoded image frame, such as upper and lower subsets or even diagonal subsets.

For each coding block 320 in the first subset, the motion vector of the first portion (i.e., the portion referenced as 402 in Figure 4) is set to a uniform first vector. Similarly, for each coding block 320 in the second subset, the motion vector of the first portion is set to a uniform second vector. The first vector is chosen as the shortest possible motion vector that, for each coding block in the first subset, points to a corresponding coding block in the second masked region of the pre-generated encoded image frame, such as a block located three blocks to the left of each coding block. Likewise, the second vector is selected as the shortest possible vector that, for each coding block in the second subset, points to a coding block in the second masked region, such as a block three blocks to the right of each coding block.

Advantageously, by ensuring that motion vectors within each subset remain uniform, the encoder can efficiently predict and encode motion vectors using delta coding, thus reducing the number of bits needed to store motion data. Additionally, as discussed above using shorter motion vectors improves compression efficiency.

There are different ways to determine the pre-generated encoded image frame 300. In one example, bespoke or proprietary software 702 may be used. This is shown in figure 7.

In one example, an iterative approach is used to determine the pre-generated encoded image frame 300. The process begins by creating an image frame with the same resolution as the subsequently captured image frames (e.g., those captured by a fisheye camera). The first masked region (which is smooth in its original form) is then applied, at least conceptually, to the image data of the created image frame. Image data of pixels belonging to the first masked region may for example be set to black, while image data not belonging to the first masked region may be set to white. Other uniform colours may be used, or even real image data from the camera for the image data not belonging to the first masked region.

Next, the image data is iteratively divided into coding blocks, starting with the largest possible block size supported by the codec for which the pre-generated encoded image frame 300 is being determined. If a coding block does not contain the edge of the first mask, it remains unchanged and is assigned a zero motion vector, meaning no transformation is applied. However, if the coding block contains the edge of the first mask, it is subdivided into smaller blocks, for example, by splitting it into two subblocks.

For each subblock, the same iterative process is applied. If a subblock does not contain the edge of the first mask, it remains as is and retains a zero motion vector. If it does contain the edge, it may be further subdivided. This process continues until a coding block reaches the smallest possible size supported by the codec (e.g., 4×4 pixels) or a predefined minimum size (e.g., 8×8 pixels) is identified as containing the edge of the first mask.

At this final stage, the block is divided into two portions, for example, as discussed in Figure 4, using a wedge codebook or another suitable partitioning technique. One of these portions is assigned a motion vector different from zero, allowing it to reference a corresponding fully masked block from the pre-generated encoded image frame, while the other portion retains a zero motion vector.

In other examples, an encoder may be used to determine the pre-generated encoded image frame 300, as illustrated in Figure 8. The encoder 806 is specifically configured not to generate any residual data, ensuring that mask transformation is handled entirely through motion vectors.

The process begins by creating a first template image frame that has the same resolution as the subsequently captured image frames. The first mask is applied to define a first masked template frame 802, which may be accomplished by setting the image data within the first masked area to black while the unmasked regions are set to white or grey. Similarly, a second template image frame is created, also matching the resolution of the captured image frames, with the second mask applied to generate a second masked template frame 804. The second masked area is set to black, while the unmasked portions are set to white or grey.

By the term "masked template frame" should, in the context of present specification, be understood specially generated image frames used to assist in the creation of the pre-generated encoded image frame 300 by defining masked and unmasked regions in a structured way. These frames serve as input to the encoder 806 and help establish how motion vectors should be applied to transform the mask efficiently without the need of residual data.

Both template frames are then input to the encoder 806, which encodes the second masked template frame 804 as an I-frame, meaning it is stored as a standalone reference frame. The first masked template frame 802 is then encoded as a P-frame, referencing the encoded second masked template frame. The encoded first masked template frame is set as the pre-generated encoded image frame 300.

Since the encoder is configured to omit residual data, the transformation from the second masked region to the first masked region is handled entirely by motion vectors, ensuring an efficient transition between the two masking patterns that can be used as described herein.

By using an existing encoder rather than manually defining motion vectors, this method automates the creation of the pre-generated encoded image frame, eliminating the need for complex manual processing and making it adaptable to different encoding setups. Additionally, since the encoder naturally optimizes motion vectors, it ensures that the transition between the second masked region and the first masked region is handled precisely and consistently across frames.

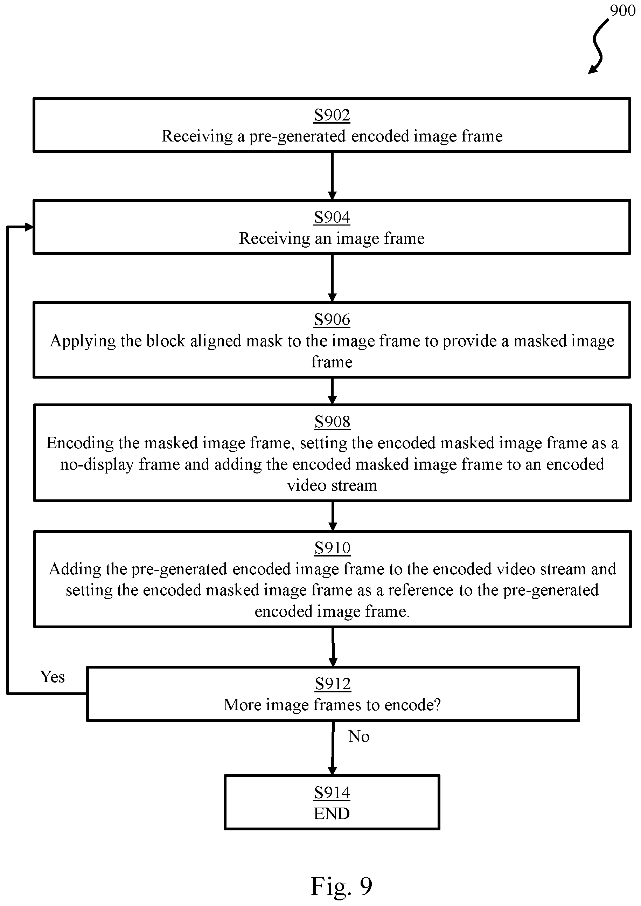

Figure 9 shows by way of example a flow chart of a method 900 of encoding an image frame in a video stream, such that a decoded version of the encoded the image frame is provided with a first masked region as described herein.

The method 900 comprises receiving S902 a pre-generated encoded image frame having a same resolution as the image frame, the pre-generated encoded image frame comprising motion vectors but not any residual data, wherein the motion vectors are configured to expand a second masked region, defined by a second mask, into the first masked region.

The method 900 further comprises receiving S904 the image frame to be encoded.

The method 900 further comprises applying S906 the second mask to the image frame to provide a masked image frame.

The method 900 further comprises encoding S908 the masked image frame, setting the encoded masked image frame as a no-display frame and adding the encoded masked image frame to an encoded video stream.

The method 900 further comprises adding S910 the pre-generated encoded image frame to the encoded video stream and setting the encoded masked image frame as a reference to the pre-generated encoded image frame.

The steps S904 to S910 may then be repeated for further image frames of a sequence of image frames of the video stream, such that the further image frame is encoded and added to the encoded video stream. If it is determined S912 that there are no further image frames to encode, or if for some reason the masked area has changed in any way, the method 900 is ended S914. If the masked area is changed, a new corresponding pre-generated encoded image frame needs to be received S902 before continuing the method.

In various examples, the methods (e.g., method 900) and functionalities described in this document can be implemented using a non-transitory computer-readable storage medium containing instructions that, when executed by one or more processing devices, perform these methods and functionalities. This storage medium may include, for example, flash memory, solid-state drives, hard drives, or other types of memory capable of retaining program instructions. Execution of these instructions can be carried out by various types of processors, including general-purpose processors (such as those found in standard desktop and laptop computers) as well as special-purpose microprocessors designed for specific tasks. These processors can operate as standalone processing units or as part of a multi-core or multi-processor system, which may enhance processing efficiency by distributing tasks across multiple cores. The processors can be supplemented by, or incorporated in, ASICs (application-specific integrated circuits).

The above embodiments are to be understood as illustrative examples of the invention. Further embodiments of the invention are envisaged. For example, a new corresponding pre-generated encoded image frame may need to be received S902 based on user input, e.g., if a new area in the captured scene is deemed to be uninteresting and should be masked to save bandwidth. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. For example, if the used hardware or software encoder has support for using codebooks for wedge partitioning, the encoding strategy of using the wedge code book and identifying coding blocks intersected by a masked region could be applied without using the pre-generated encoded image frame. In this embodiment, the method involves encoding the actual image frame directly, utilizing a fine, smooth masked region (i.e., the first masked region as discussed herein) without introducing additional frames. The encoder can determine in advance which codebook should be used for each coding block, based on how the edge of the masked region intersects the block. For example, the encoder can be specifically controlled to select a predetermined wedge mask for each coding block along the edge of the masked region, rather than performing a search through all available options (e.g., 16 alternatives).

It should be noted that wedge codebooks is an advanced tool that is often not supported by the encoder. The above described embodiment of encoding the actual image frame with the masked region directly, without introducing additional frames, is only applicable if the use of codebooks is supported by the encoder. However, support for codebooks in decoders is more common and the invention is particularly useful in those cases where the encoder does not have support for codebooks but the decoder does.

## Claims

1. A method (900) of encoding an image frame in a video stream, such that a decoded version (624) of the encoded image frame is provided with a first masked region (104), the method comprising;
receiving (S902) a pre-generated encoded image frame (300) having a same resolution as the image frame, the pre-generated encoded image frame comprising motion vectors (606) but not any residual data, wherein the motion vectors are configured to expand a second masked region (204), defined by a second mask, into the first masked region, wherein the second masked region has an edge (110) aligned to a set of coding blocks (320) of the pre-generated encoded image frame, such that each coding block of the set of coding blocks is not part of the second masked region, and wherein the first masked region has an edge that divides each coding block of the set of coding blocks;
applying (S906) the second mask to the image frame to provide a masked image frame;
encoding (S908) the masked image frame, setting the encoded masked image frame as a no-display frame and adding the encoded masked image (502) frame to an encoded video stream (500); and
adding (S910) the pre-generated encoded image frame to the encoded video stream and setting the encoded masked image frame as a reference to the pre-generated encoded image frame.

2. The method of claim 1,
wherein the edge of the first masked region divides each coding block of the set of coding blocks into a first portion (402) corresponding to the first masked region and a second portion (404) not corresponding to the first masked region; and
wherein each coding block of the set of coding blocks in the pre-generated encoded image frame is encoded using a wedge code book (302, 310) into a first encoded portion corresponding to the first portion, and a second encoded portion corresponding to the second portion, wherein the second portion is associated with a zero motion vector, and wherein the first portion is associated with a motion vector pointing to a coding block of the second masked region in the pre-generated encoded image frame.

3. The method of claim 2, wherein encoding each coding block of the set of coding blocks in the pre-generated encoded image frame comprises:
selecting a wedge mask (304) from the wedge code book depending on how the edge of the first masked region divides the coding block; and
encoding the coding block using the selected wedge mask.

4. The method of any one of claims 2-3, further comprising generating the pre-generated encoded image frame using software (702), by:
for each coding block of the pre-generated encoded image frame:
upon the set of coding blocks not comprising the coding block, defining a zero motion vector for the coding block;
upon the set of coding blocks comprising the coding block, encoding the coding block using the wedge code book

5. The method of claim 4, wherein the set of coding blocks is divided into a first subset and a second subset based on their position in the pre-generated encoded image frame, wherein the step of defining a motion vector of the first portion to a vector pointing to a coding block of the second masked region in the pre-generated encoded image frame comprises:
for coding blocks of the first subset, setting the motion vector of the first portion to a same first vector; and
for coding blocks of the second subset, setting the motion vector of the first portion to a same second vector.

6. The method of claim 5, wherein the first and second vector is determined by:
determining the first vector by determining a shortest vector that, for each coding block of the first subset results in a pointer to a coding block of the second masked region in the pre-generated encoded image frame; and
determining the second vector by determining a shortest vector that, for each coding block of the second subset results in a pointer to a coding block of the second masked region in the pre-generated encoded image frame;

7. The method of any one of claims 1-3, wherein the first masked region is defined by a first mask, the method further comprising generating the pre-generated encoded image using an encoder (806) supporting wedge code books by:
configuring the encoder to not create residual data;
creating a first template image frame having the same resolution as the image frame, and applying the first mask to define a first masked template frame (802);
creating a second template image frame having the same resolution as the image frame, and applying the second mask to define a second masked template frame (804);
encoding, by the encoder, the second masked template frame as an I-frame;
encoding, by the encoder, the first masked template frame as a P-frame referencing the encoded second masked template frame; and
setting the encoded first masked template frame as the pre-generated encoded image.

8. The method of any one of claims 2-7, wherein the wedge code book is one of: AV1 wedge codebook, or AV2 wedge codebook.

9. The method of any one of claims 1-8, wherein the image frame is captured by a fisheye camera, wherein first masked region covers a periphery of the image frame to remove noise and optical effects.

10. The method of any one of claims 1-8, wherein the first masked region covers image data from areas in a captured scene labelled as uninteresting.

11. The method of claim 10, wherein the first masked region has a polygonal shape.

12. The method of any one of claims 1-10, further comprising
encoding each further image frame of a sequence of image frames of the video stream into the encoded video stream by:
applying the second mask to the further image frame to provide a masked further image frame;
encoding the masked further image frame, setting the encoded further masked image frame as a no-display frame and adding the encoded further masked image frame to the encoded video stream; and
adding the pre-generated encoded image frame to the encoded video stream and setting the encoded further masked image frame as a reference to the pre-generated encoded image frame.

13. A non-transitory computer-readable storage medium having stored thereon instructions for implementing the method according to any one of claims 1-12 when executed on a device having processing capabilities.

14. A device for encoding an image frame in a video stream, such that a decoded version (624) of the encoded the image frame is provided with a first masked region (104), the device configured for:
receiving (S902) a pre-generated encoded image frame (300) having a same resolution as the image frame, the pre-generated encoded image frame comprising motion vectors (606) but not any residual data, wherein the motion vectors are configured to expand a second masked region (204), defined by a second mask, into the first masked region, wherein the second masked region has an edge (110) aligned to a set of coding blocks (320) of the pre-generated encoded image frame, such that each coding block of the set of coding blocks is not part of the second masked region, and wherein the first masked region has an edge that divides each coding block of the set of coding blocks;
applying (S906) the second mask to the image frame to provide a masked image frame;
encoding (S908) the masked image frame, setting the encoded masked image frame as a no-display frame and adding the encoded masked image frame (502) to an encoded video stream (500); and
adding (S910) the pre-generated encoded image frame to the encoded video stream and setting the encoded masked image frame as a reference to the pre-generated encoded image frame.

15. The device of claim 14, being a fisheye camera, wherein first masked region covers a periphery of the image frame to remove noise and optical effects.

## Patentansprüche

1. Verfahren (900) zum derartigen Codieren eines Bildframes in einem Videostream, dass eine decodierte Version (624) des codierten Bildframes mit einem ersten maskierten Bereich (104) versehen wird, wobei das Verfahren Folgendes umfasst:
Empfangen (S902) eines vorgenerierten codierten Bildframes (300) mit einer gleichen Auflösung wie der Bildframe, wobei der vorgenerierte codierte Bildframe Bewegungsvektoren (606), jedoch keine Restdaten umfasst, wobei die Bewegungsvektoren dazu konfiguriert sind, einen zweiten maskierten Bereich (204), der durch eine zweite Maske definiert ist, in den ersten maskierten Bereich zu erweitern, wobei der zweite maskierte Bereich eine Kante (110) aufweist, die mit einem Satz von Codierungsblöcken (320) des vorgenerierten Bildframes so ausgerichtet ist, dass jeder Codierungsblock des Satzes von Codierungsblöcken nicht Teil des zweiten maskierten Bereichs ist, und wobei der erste maskierte Bereich eine Kante aufweist, die jeden Codierungsblock des Satzes von Codierungsblöcken unterteilt;
Anwenden (S906) der zweiten Maske auf den Bildframe, um einen maskierten Bildframe bereitzustellen;
Codieren (S908) des maskierten Bildframes, Einstellen des codierten maskierten Bildframes als einen nicht anzuzeigenden Frame und Hinzufügen des codierten maskierten Bildframes (502) zu einem codierten Videostream (500); und
Hinzufügen (S910) des vorgenerierten codierten Bildframes zu dem codierten Videostream und Einstellen des codierten maskierten Bildframes als eine Referenz für den vorgenerierten codierten Bildframe.

2. Verfahren nach Anspruch 1,
wobei die Kante des ersten maskierten Bereichs jeden Codierungsblock des Satzes von Codierungsblöcken in einen ersten Teil (402), der dem ersten maskierten Bereich entspricht, und einen zweiten Teil (404), der nicht dem ersten maskierten Bereich entspricht, unterteilt; und
wobei jeder Codierungsblock des Satzes von Codierungsblöcken in dem vorgenerierten codierten Bildframe unter Verwendung eines Keilcodebuchs (302, 310) in einen ersten codierten Teil, der dem ersten Teil entspricht, und einen zweiten codierten Teil, der dem zweiten Teil entspricht, codiert wird, wobei der zweite Teil mit einem Bewegungsvektor Null assoziiert ist, und wobei der erste Teil mit einem Bewegungsvektor assoziiert ist, der auf einen Codierungsblock des zweiten maskierten Bereichs in dem vorgenerierten codierten Bildframe zeigt.

3. Verfahren nach Anspruch 2, wobei das Codieren jedes Codierungsblocks des Satzes von Codierungsblöcken in dem vorgenerierten codierten Bildframe Folgendes umfasst:
Auswählen einer Keilmaske (304) aus dem Keilcodebuch in Abhängigkeit davon, wie die Kante des ersten maskierten Bereichs den Codierungsblock unterteilt; und
Codieren des Codierungsblocks unter Verwendung der ausgewählten Keilmaske.

4. Verfahren nach einem der Ansprüche 2-3, ferner umfassend Generieren des vorgenerierten codierten Bildframes unter Verwendung von Software (702) durch:
für jeden Codierungsblock des vorgenerierten codierten Bildframes:
wenn der Satz von Codierungsblöcken den Codierungsblock nicht umfasst, Definieren eines Bewegungsvektors Null für den Codierungsblock;
wenn der Satz von Codierungsblöcken den Codierungsblock umfasst, Codieren des Codierungsblocks unter Verwendung des Keilcodebuchs

5. Verfahren nach Anspruch 4, wobei der Satz von Codierungsblöcken basierend auf ihrer Position in dem vorgenerierten codierten Bildframe in einen ersten Teilsatz und einen zweiten Teilsatz unterteilt wird, wobei der Schritt des Definierens eines Bewegungsvektors des ersten Teils als einen Vektor, der auf einen Codierungsblock des zweiten maskierten Bereichs in dem vorgenerierten codierten Bildframe zeigt, Folgendes umfasst:
für Codierungsblöcke des ersten Teilsatzes, Einstellen des Bewegungsvektors des ersten Teils auf einen gleichen ersten Vektor; und
für Codierungsblöcke des zweiten Teilsatzes, Einstellen des Bewegungsvektors des ersten Teils auf einen gleichen zweiten Vektor.

6. Verfahren nach Anspruch 5, wobei der erste und der zweite Vektor durch Folgendes bestimmt werden:
Bestimmen des ersten Vektors durch Bestimmen eines kürzesten Vektors, der für jeden Codierungsblock des ersten Teilsatzes einen Zeiger auf einen Codierungsblock des zweiten maskierten Bereichs in dem vorgenerierten codierten Bildframe ergibt; und
Bestimmen des zweiten Vektors durch Bestimmen eines kürzesten Vektors, der für jeden Codierungsblock des zweiten Teilsatzes einen Zeiger auf einen Codierungsblock des zweiten maskierten Bereichs in dem vorgenerierten codierten Bildframe ergibt;

7. Verfahren nach einem der Ansprüche 1-3, wobei der erste maskierte Bereich durch eine erste Maske definiert wird, wobei das Verfahren ferner Generieren des vorgenerierten codierten Bildes unter Verwendung eines Codierers (806), der Keilcodebücher unterstützt, durch Folgendes umfasst:
Konfigurieren des Codierers so, dass er keine Restdaten erzeugt;
Erzeugen eines ersten Vorlagenbildframes mit der gleichen Auflösung wie der Bildframe und Anwenden der ersten Maske, um einen ersten maskierten Vorlagenframe (802) zu definieren;
Erzeugen eines zweiten Vorlagenbildframes mit der gleichen Auflösung wie der Bildframe und Anwenden der zweiten Maske, um einen zweiten maskierten Vorlagenframe (804) zu definieren;
Codieren, durch den Codierer, des zweiten maskierten Vorlagenframes als einen I-Frame;
Codieren, durch den Codierer, des ersten maskierten Vorlagenframes als einen P-Frame, der den codierten zweiten maskierten Vorlagenframe referenziert; und
Einstellen des codierten ersten maskierten Vorlagenframes als das vorgenerierte codierte Bild.

8. Verfahren nach einem der Ansprüche 2-7, wobei das Keilcodebuch eines von Folgendem ist: ein AV1-Keilcodebuch oder ein AV2-Keilcodebuch.

9. Verfahren nach einem der Ansprüche 1-8, wobei der Bildframe durch eine Fischaugenkamera erfasst wird, wobei der erste maskierte Bereich eine Peripherie des Bildframes abdeckt, um Rauschen und optische Effekte zu entfernen.

10. Verfahren nach einem der Ansprüche 1-8, wobei der erste maskierte Bereich Bilddaten aus Bereichen in einer erfassten Szene abdeckt, die als uninteressant gekennzeichnet sind.

11. Verfahren nach Anspruch 10, wobei der erste maskierte Bereich eine polygonale Form aufweist.

12. Verfahren nach einem der Ansprüche 1-10, ferner umfassend
Codieren jedes weiteren Bildframes einer Sequenz von Bildframes des Videostreams in den codierten Videostream durch:
Anwenden der zweiten Maske auf den weiteren Bildframe, um einen maskierten weiteren Bildframe bereitzustellen;
Codieren des maskierten weiteren Bildframes, Einstellen des codierten weiteren maskierten Bildframes als einen nicht anzuzeigenden Frame und Hinzufügen des codierten weiteren maskierten Bildframes zu dem codierten Videostream; und
Hinzufügen des vorgenerierten codierten Bildframes zu dem codierten Videostream und Einstellen des codierten weiteren maskierten Bildframes als eine Referenz für den vorgenerierten codierten Bildframe.

13. Nichtflüchtiges computerlesbares Speichermedium, auf dem Anweisungen zum Implementieren des Verfahrens nach einem der Ansprüche 1-12, wenn sie auf einer Vorrichtung mit Verarbeitungsfähigkeiten ausgeführt werden, gespeichert sind.

14. Vorrichtung zum derartigen Codieren eines Bildframes in einem Videostream, dass eine decodierte Version (624) des codierten Bildframes mit einem ersten maskierten Bereich (104) versehen wird, wobei die Vorrichtung zu Folgendem konfiguriert ist:
Empfangen (S902) eines vorgenerierten codierten Bildframes (300) mit einer gleichen Auflösung wie der Bildframe, wobei der vorgenerierte codierte Bildframe Bewegungsvektoren (606), jedoch keine Restdaten umfasst, wobei die Bewegungsvektoren dazu konfiguriert sind, einen zweiten maskierten Bereich (204), der durch eine zweite Maske definiert ist, in den ersten maskierten Bereich zu erweitern, wobei der zweite maskierte Bereich eine Kante (110) aufweist, die mit einem Satz von Codierungsblöcken (320) des vorgenerierten Bildframes so ausgerichtet ist, dass jeder Codierungsblock des Satzes von Codierungsblöcken nicht Teil des zweiten maskierten Bereichs ist, und wobei der erste maskierte Bereich eine Kante aufweist, die jeden Codierungsblock des Satzes von Codierungsblöcken unterteilt;
Anwenden (S906) der zweiten Maske auf den Bildframe, um einen maskierten Bildframe bereitzustellen;
Codieren (S908) des maskierten Bildframes, Einstellen des codierten maskierten Bildframes als einen nicht anzuzeigenden Frame und Hinzufügen des codierten maskierten Bildframes (502) zu einem codierten Videostream (500); und
Hinzufügen (S910) des vorgenerierten codierten Bildframes zu dem codierten Videostream und Einstellen des codierten maskierten Bildframes als eine Referenz für den vorgenerierten codierten Bildframe.

15. Vorrichtung nach Anspruch 14, die eine Fischaugenkamera ist, wobei der erste maskierte Bereich eine Peripherie des Bildframes abdeckt, um ein Rauschen und optische Effekte zu entfernen.

## Revendications

1. Procédé (900) de codage d'une image dans un flux vidéo, de telle sorte qu'une version décodée (624) de l'image codée soit pourvue d'une première région masquée (104), le procédé comprenant ;
la réception (S902) d'une image codée préalablement générée (300) ayant une même résolution que l'image, l'image codée préalablement générée comprenant des vecteurs (606) de mouvement mais aucune donnée de résidus, dans lequel les vecteurs de mouvement sont configurés pour étendre une seconde région masquée (204), définie par un second masque, jusque dans la première région masquée, la seconde région masquée présentant un bord (110) aligné sur un ensemble de blocs (320) de codage de l'image codée préalablement générée, de telle sorte que chaque bloc de codage de l'ensemble de blocs de codage ne fasse pas partie de la seconde région masquée, et la première région masquée présentant un bord qui divise chaque bloc de codage de l'ensemble de blocs de codage ; l'application (S906) du second masque à l'image pour obtenir une image masquée ;
le codage (S908) de l'image masquée, la spécification de l'image masquée codée en tant qu'image à ne pas afficher et l'ajout de l'image masquée codée (502) à un flux vidéo codé (500) ; et
l'ajout (S910) de l'image codée préalablement générée au flux vidéo codé et la spécification de l'image masquée codée en tant que référence à l'image codée préalablement générée.

2. Procédé selon la revendication 1,
le bord de la première région masquée divisant chaque bloc de codage de l'ensemble de blocs de codage en une première partie (402) correspondant à la première région masquée et une seconde partie (404) ne correspondant pas à la première région masquée ; et
chaque bloc de codage de l'ensemble de blocs de codage dans l'image codée préalablement générée étant codé à l'aide d'un livre (302, 310) de codes en coin en une première partie codée correspondant à la première partie, et une seconde partie codée correspondant à la seconde partie, la seconde partie étant associée à un vecteur de mouvement nul, et la première partie étant associée à un vecteur de mouvement pointant vers un bloc de codage de la seconde région masquée dans l'image codée préalablement générée.

3. Procédé selon la revendication 2, le codage de chaque bloc de codage de l'ensemble de blocs de codage dans l'image codée préalablement générée comprenant :
la sélection d'un masque (304) en coin dans le livre de codes en coin en fonction de la façon dont le bord de la première région masquée divise le bloc de codage ; et
le codage du bloc de codage à l'aide du masque en coin sélectionné.

4. Procédé selon l'une quelconque des revendications 2 à 3, comprenant en outre la génération de l'image codée préalablement générée à l'aide d'un logiciel (702), par :
pour chaque bloc de codage de l'image codée préalablement générée :
sur l'ensemble de blocs de codage ne comprenant pas le bloc de codage, définition d'un vecteur de mouvement nul pour le bloc de codage ;
Sur l'ensemble des blocs de codage comprenant le bloc de codage, codage du bloc de codage à l'aide du livre de codes en coin

5. Procédé selon la revendication 4, l'ensemble de blocs de codage étant divisé en un premier sous-ensemble et un second sous-ensemble sur la base de leur position dans l'image codée préalablement générée, l'étape de définition d'un vecteur de mouvement de la première partie comme un vecteur pointant vers un bloc de codage de la seconde région masquée dans l'image codée préalablement générée comprenant :
pour coder des blocs du premier sous-ensemble, la spécification du vecteur de mouvement de la première partie comme un même premier vecteur ; et
pour coder des blocs du second sous-ensemble, la spécification du vecteur de mouvement de la première partie comme un même second vecteur.

6. Procédé selon la revendication 5, le premier et le second vecteur étant déterminés par :
la détermination du premier vecteur en déterminant un vecteur le plus court qui, pour chaque bloc de codage du premier sous-ensemble, donne lieu à un pointeur vers un bloc de codage de la seconde région masquée dans l'image codée préalablement générée ; et
la détermination du second vecteur en déterminant un vecteur le plus court qui, pour chaque bloc de codage du second sous-ensemble, donne lieu à un pointeur vers un bloc de codage de la seconde région masquée dans l'image codée préalablement générée ;

7. Procédé selon l'une quelconque des revendications 1 à 3, la première région masquée étant définie par un premier masque, le procédé comprenant en outre la génération de l'image codée préalablement générée en utilisant un codeur (806) prenant en charge des livres de codes en coin par :
la configuration du codeur pour ne pas créer de données de résidus ;
la création d'une première image modèle ayant la même résolution que l'image, et l'application du premier masque pour définir une première image modèle masquée (802) ;
la création d'une seconde image modèle ayant la même résolution que l'image, et l'application du second masque pour définir une seconde image modèle masquée (804) ;
le codage, par le codeur, de la seconde image modèle masquée en tant qu'image I ;
le codage, par le codeur, de la première image modèle de modèle masquée en tant qu'image P référençant la seconde image modèle masquée codée ; et
la spécification de la première image modèle masquée codée en tant qu'image codée préalablement générée.

8. Procédé selon l'une quelconque des revendications 2 à 7, le livre de codes en coin étant un livre parmi : un livre de codes en coin AV1 ou un livre de codes en coin AV2.

9. Procédé selon l'une quelconque des revendications 1 à 8, dans lequel l'image est capturée par une caméra à très grand angle, la première région masquée couvrant une périphérie de l'image pour éliminer le bruit et les effets optiques.

10. Procédé selon l'une quelconque des revendications 1 à 8, la première région masquée couvrant des données d'image provenant de zones d'une scène capturée étiquetées comme non intéressantes.

11. Procédé selon la revendication 10, la première région masquée ayant une forme polygonale.

12. Procédé selon l'une quelconque des revendications 1 à 10, comprenant en outre
le codage de chaque image supplémentaire d'une séquence d'images du flux vidéo pour donner le flux vidéo codé par :
l'application du second masque à l'image supplémentaire pour obtenir une image supplémentaire masquée ;
le codage de l'image supplémentaire masquée, la spécification de l'image supplémentaire masquée codée en tant qu'image à ne pas afficher et l'ajout de l'image supplémentaire masquée codée au flux vidéo codé ; et
l'ajout de l'image codée préalablement générée au flux vidéo codé et la spécification de l'image masquée codée supplémentaire en tant que référence à l'image codée préalablement générée.

13. Support de stockage non transitoire lisible par ordinateur sur lequel sont stockées des instructions pour mettre en œuvre le procédé selon l'une quelconque des revendications 1 à 12 lorsqu'il est exécuté sur un dispositif ayant des capacités de traitement.

14. Dispositif de codage d'une image dans un flux vidéo, de telle sorte qu'une version décodée (624) de l'image codée soit pourvue d'une première région masquée (104), le dispositif étant configuré pour :
la réception (S902) d'une image codée préalablement générée (300) ayant une même résolution que l'image, l'image codée préalablement générée comprenant des vecteurs (606) de mouvement mais aucune donnée de résidus, dans lequel les vecteurs de mouvement sont configurés pour étendre une seconde région masquée (204), définie par un second masque, jusque dans la première région masquée, la seconde région masquée présentant un bord (110) aligné sur un ensemble de blocs (320) de codage de l'image codée préalablement générée, de telle sorte que chaque bloc de codage de l'ensemble de blocs de codage ne fasse pas partie de la seconde région masquée, et la première région masquée présentant un bord qui divise chaque bloc de codage de l'ensemble de blocs de codage ;
l'application (S906) du second masque à l'image pour obtenir une image masquée ;
le codage (S908) de l'image masquée, la spécification de l'image masquée codée en tant qu'image à ne pas afficher et l'ajout de l'image masquée codée (502) à un flux vidéo codé (500) ; et
l'ajout (S910) de l'image codée préalablement générée au flux vidéo codé et la spécification de l'image masquée codée en tant que référence à l'image codée préalablement générée.

15. Dispositif selon la revendication 14, étant une caméra à très grand angle, la première région masquée couvrant une périphérie de l'image pour éliminer le bruit et les effets optiques.
